# EUROPÄISCHE PATENTSCHRIFT

(11) **EP 3 959 358 B1**
(45) Veröffentlichungstag und Bekanntmachung des Hinweises auf die Patenterteilung: **07.06.2023**
(21) Anmeldenummer: 20721231.7
(22) Anmeldetag: 27.04.2020
(51) Int. Cl.: C23G 1/12, C23G 1/22, C23G 1/00, G01N 21/89, C23G 3/02, G01N 21/25

(54) **OBERFLÄCHENBEHANDLUNG VON FLACHPRODUKTEN AUS ALUMINIUMLEGIERUNGEN UMFASSEND FARBMESSUNGEN**
SURFACE TREATMENT OF FLAT PRODUCTS MADE OF ALUMINIUM ALLOYS CONTAINING COLOR MEASUREMENTS
TRAITEMENT DE SURFACE DES PRODUITS PLANS D'ALLIAGES D'ALUMINIUM COMPRENANT DES MESURES DE COULEUR

(30) Priorität: 25.04.2019 EP 19171086
(43) Veröffentlichungstag der Anmeldung: 02.03.2022
(73) Patentinhaber: Speira GmbH, 41515 Grevenbroich (DE)
(72) Erfinder: ZENTZIS, Dirk, 47918 Tönisvorst (DE); NITZSCHE, Gernot, 53340 Meckenheim (DE); ECKHARD, Kathrin, 50969 Köln (DE)
(74) Vertreter: Cohausz & Florack
(86) Internationale Anmeldenummer: PCT/EP2020/061619
(87) Internationale Veröffentlichungsnummer: WO 2020/216959

(56) Entgegenhaltungen:
- EP-A1- 0 898 163
- EP-A1- 2 623 639
- WO-A1-2014/023283
- CN-A- 1 427 091
- DE-U1-202012 012 549
- JP-A- H08 304 273
- KR-A- 20140 023 693
- US-A1- 2010 269 854

## Beschreibung

Die Erfindung betrifft ein Verfahren zur Oberflächenbehandlung von Flachprodukten aus Aluminiumlegierungen, das Verfahren umfassend ein Beizen des Flachprodukts insbesondere zur Entfettung des Flachprodukts.

Flachprodukte aus Aluminium und Aluminiumlegierungen wie Bänder und Bleche werden insbesondere durch Walzprozesse hergestellt, wobei das Flachprodukt ein Warmwalzen und/oder Kaltwalzen durchläuft. Ebenso kann das Flachprodukt durch Bandguss und anschließendes Kaltwalzen hergestellt werden. Bei der Herstellung des Flachprodukts wird typischerweise bei den Walzschritten Walzöl verwendet, dessen Reste auch nach dem letzten Walzstich zusammen mit Abrieb und Partikeln auf der Oberfläche des Flachprodukts verbleiben. Zudem wird während der Walzprozesse durch Einwirkung der Arbeitswalzen und mechanische Verformung unter erhöhter Temperatur die Oxidschicht in die Oberfläche des Flachproduktes eingearbeitet. Diese so erzeugte deformierte Oberflächenschicht weist für bestimmte Anwendungen eine unerwünschte Struktur einer Oxidschicht an der Oberfläche des Flachprodukts auf. Zwischen den einzelnen Walzstichen und/oder nach dem Walzen können auch Wärmebehandlungen wie beispielsweise Zwischenglühungen, Endglühungen, Lösungs- oder Zustandsglühungen durchgeführt werden, um das Gefüge der Aluminiumlegierung in den Flachprodukten in einen spezifischen Zustand zu überführen und die gewünschten mechanischen Eigenschaften zu erreichen. Bei Wärmebehandlungen kann es zu Anreicherung von Legierungsbestandteilen in oberflächennahen Bereichen der Flachprodukte kommen, wobei beispielsweise Zink, Silizium, Magnesium und Kupfer vermehrt an der Oberfläche auftreten.

Flachprodukte aus Aluminiumlegierungen werden typischerweise einer Oberflächenbehandlung bzw. Veredlung unterzogen, insbesondere da die Oberflächen von Produkten aus Aluminium und Aluminiumlegierungen mit Folgeprozessschritten bearbeitet und beispielsweise eloxiert, beschichtet, geklebt und/oder lackiert werden. Die Flachprodukte müssen hierfür spezifischen Anforderungen an die Oberflächenqualität genügen, um die Oberfläche für entsprechende Folgeprozessschritte vorzubereiten, welche am Flachprodukt oder hieraus hergestellten Produkten oder Halbzeugen vorgenommen werden.

Eine Oberflächenbehandlung von Flachprodukten aus Aluminiumlegierungen kann über ein Beizen des Flachprodukts vorgenommen werden, wobei unter anderem eine Entfettung des Flachprodukts bewirkt wird. Mit dem Beizen bzw. Entfetten werden unter anderem Rückstände des Walzprozesses entfernt. Rückstände des Walzprozesses können beispielsweise Walzölreste und auf der Oberfläche befindliche Partikel, Schmutz und Abrieb sein. Ein Beizen umfasst insbesondere ein zumindest teilweises Entfernen der Oxidschicht sowie gegebenenfalls ein Entfernen von in die Oberfläche eingewalzten Oxiden sowie an der Oberfläche angereicherten Legierungselementen, Partikeln oder intermetallischen Phasen. Für bestimmte Anwendungen kann das Beizen beispielsweise ein möglichst vollständiges Entfernen der Oxidschicht sowie gegebenenfalls ein Entfernen von in die Oberfläche eingewalzten Oxiden sowie an der Oberfläche angereicherten Legierungselementen, Partikeln oder intermetallischen Phasen umfassen.

Ein Beizen umfasst einen Materialabtrag an der Oberfläche des Flachprodukts über einen chemischen Prozess. Ein optimales Beizen erfordert hierbei typischerweise einerseits eine praktisch vollständige Reinigung und einen ausreichenden Materialabtrag an der Oberfläche, um beispielsweise eine möglichst vollständige Entfernung der Oxidschicht zu gewährleisten. Andererseits soll die Oberflächenbehandlung wirtschaftlich sein und eine hohe Prozessgeschwindigkeit bei einem möglichst geringen Einsatz an Chemikalien ermöglichen.

Zur Regelung des Beizens werden üblicherweise zunächst Annahmen über die Beizrate bzw. den Materialabtrag in Abhängigkeit der Art, Konzentration, Temperatur und der mechanischen Einwirkung der verwendeten Chemikalien auf die Oberfläche des Flachprodukts getroffen und mit der zu erwartenden Verunreinigung und Oxidschichtdicke abgeglichen. Über diese Annahmen wird eine minimale Kontaktzeit der Oberfläche des Flachprodukts mit einer oder mehreren Behandlungslösungen bzw. Beizlösungen bestimmt.

Beispielsweise wird weiter die Anwendbarkeit der Folgeprozessschritte geprüft, etwa durch eine Bestimmung der Benetzbarkeit, Phosphatierbarkeit, Haftfähigkeit von Lack oder Klebstoffen und eine Messung des Punktschweißübergangswiderstands an den behandelten Flachprodukten. Eine solche Analytik wird jedoch typischerweise anhand von entnommenen Mustern im Labor vorgenommen und kann daher nur zeitverzögert und nicht inline mit der Oberflächenbehandlung eingesetzt werden. Eine weitere Möglichkeit der Beurteilung der Wirkung der Oberflächenbehandlung ist eine Bestimmung des Materialabtrags über gravimetrische Methoden. Das Gewicht des erzielten Materialabtrags kann im Vergleich zum Gesamtgewicht jedoch sehr gering ausfallen, womit gravimetrische Methoden aufgrund der damit verbundenen Ungenauigkeiten oftmals nicht praktikabel sind. Im kontinuierlichen industriellen Prozess ist es zudem nicht möglich, die identische Probe vor und nach der Beize zu wiegen. Da der angestrebte Beizabtrag aber geringer ist als die Dickentoleranz gewalzter Aluminiumbänder, ist der erzielte Beizabtrag gravimetrisch nicht zugänglich.

Zur Regelung des Beizens während der laufenden Behandlung werden daher im Stand der Technik die Eigenschaften der Behandlungslösung überwacht. Beispielsweise kann der Aluminiumgehalt in der Behandlungslösung bestimmt werden, welcher auf das Abtragen der Oxidschicht und der Aluminiumlegierung im Flachprodukt zurückgeht. Werden Flachprodukte in einem Bad mit einer Behandlungslösung behandelt, kann beispielsweise der Gehalt an Aluminiumionen im Bad durch einen ständigen, teilweisen Austausch der Behandlungslösung näherungsweise konstant bzw. innerhalb eines bestimmten Korridors gehalten werden. Hierdurch kann der Materialabtrag bezogen auf die Oberfläche jedoch nur grob abgeschätzt und über längere Zeiträume gemittelte Werte erhalten werden. Insbesondere wenn ein Bad für verschiedene Flachprodukte verwendet wird, können die Behandlungsparameter anhand des Aluminiumgehalts nur unzureichend geregelt werden. Verschiedene Flachprodukte können beispielsweise aus unterschiedlichen Aluminiumlegierungen bestehen und durch verschiedene Herstellungsverfahren erzeugt sein.

Die Bestimmung des Aluminiumionengehalts in einer alkalischen oder sauren Behandlungslösung, ebenso wie Konzentrationsbestimmung der meisten anderen Chemikalien in den Behandlungslösungen, kann typischerweise nur offline an diskontinuierlich genommenen Badproben durchgeführt werden. Eine Regelung kontinuierlicher Behandlungsprozesse mit diskontinuierlicher Analytik ist mithin häufig stark verzögert.

Weiter können auch online einfach zu bestimmende Parameter wie beispielsweise der pH-Wert und die elektrische Leitfähigkeit der Behandlungslösung überwacht werden. Ein weiterer, einfach online zu bestimmender Parameter kann beispielsweise die Geschwindigkeit und damit die Kontaktzeit des Flachprodukts zu der mindestens einen Behandlungslösung sein. Die elektrische Leitfähigkeit kann bei wässrigen Lösungen mit der Konzentration einzelner Laugen oder Säuren zuverlässig korreliert werden. Liegen hingegen mehrere Komponenten gleichzeitig in Lösung vor, geben Summenparameter wie die elektrische Leitfähigkeit oder der pH-Wert nur Anhaltspunkte über die Konzentrationen. So kann beispielsweise die Konzentration von HF in einer anderen Mineralsäure nicht ohne weiteres verfolgt werden, insbesondere nicht online verfolgt werden. Bei einer gegebenen Kontaktzeit kann daher die Chemikalienkonzentration und ihre mögliche Wirkung nur anhand von Erfahrungswerten oder diskreten Laboranalysen entnommener Proben abgeschätzt werden.

Problematisch ist weiterhin, dass die Kinetik des Beizens von einer Vielzahl von weiteren Parametern abhängt. Beispielsweise laufen mit der Behandlung auch selbstinhibierende Prozesse ab, wobei Reaktionsprodukte die eigentliche Beizreaktion verlangsamen können. Somit kann es vorkommen, dass auch mit der Einhaltung von Zielvorgaben Abweichungen in der Beizreaktion entstehen, beispielsweise durch die Anreicherung von reaktionshemmenden Begleitstoffen. Hierbei spricht man von einem "Einschlafen" der Behandlungslösung bzw. des Bads, wobei dieser Effekt auch durch die Überwachung globaler Parameter nicht ohne weiteres erkannt wird. Als globale Parameter werden in der Regel angesehen pH-Wert, elektrische Leitwerte und die Temperatur. Die Zielvorgaben können daher beispielsweise die Zielkonzentrationen der Chemikalien, bestimmte pH-Werte und elektrische Leitwerte sein.

Diese Problematik wird weiter verschärft, wenn die Behandlungslösung zur Behandlung von verschiedenen Flachprodukten eingesetzt wird, da beispielsweise die Oberflächenbeschaffenheit im Hinblick auf angereicherte Legierungsbestandteile, Walzölrückstände und Abrieb sowie die Dicke der Oxidschicht insbesondere in Abhängigkeit der verwendeten Legierungen und des Herstellungsverfahrens der Flachprodukte stark variieren kann.

Ebenfalls kann das Beizergebnis durch weitere Abweichungen in der Behandlung negativ beeinflusst werden. Beispielsweise können Parameter der Behandlungslösung wie pH-Wert und elektrische Leifähigkeit bestimmten Vorgaben entsprechen, jedoch wird eine unzureichende Beizreaktion durch andere Umstände verursacht, beispielsweise ein zu geringer Sprühauftrag der Behandlungslösung.

Insgesamt lässt sich somit anhand einer Überwachung der Behandlungslösung oftmals nicht garantieren, dass die Qualität der Behandlung den gegebenen Anforderungen entspricht. Vielmehr können Abweichungen im Verfahren, welche nicht ohne weiteres durch die bekannten Methoden zur Überwachung der Behandlungslösung erkannt werden können, zu deutlichen Qualitätseinbußen an den behandelten Flachprodukten führen.

Die EP 2 623 639 A1 und die DE 20 2012 012 549 U1 offenbaren ein Aluminiumlegierungsband, das nach einer Entfettung eine Steigerung des Luminanzwerts von mehr als 5 aufweist. Darüber hinaus ist aus der EP 2 623 639 A1 ein Verfahren zur Entfettung eines Aluminiumlegierungsbands bekannt.

Die JPH08304273 offenbart ein Verfahren, bei dem mit einer Farbmessung eine Beizbehandlung eines Aluminiumbands überprüft wird. Bei einer unzureichenden Beizung des Aluminiumbandes werden allerdings nur die Parameter der Behandlungslösung optimiert.

Die KR20140023693A betrifft eine Vorrichtung zur Beurteilung eines Beizschritts eines Metallbands, insbesondere eines Stahlbands, mit welcher eine Optimierung des Beizangriffs der Beizlösung durchgeführt werden kann.

Der vorliegenden Erfindung liegt somit die Aufgabe zugrunde, ein Verfahren zur Oberflächenbehandlung eines Flachprodukts aus einer Aluminiumlegierung anzugeben, wobei das Verfahren eine Sicherstellung des Behandlungsergebnisses erleichtert.

Die Aufgabe wird gemäß einem ersten Aspekt der Erfindung über ein Verfahren zur Oberflächenbehandlung von Flachprodukten aus Aluminiumlegierungen gelöst, wobei das Verfahren die Schritte umfasst:
- Beizen des Flachprodukts insbesondere zur Entfettung des Flachprodukts;
- Durchführen einer Farbmessung an der Oberfläche des Flachprodukts zur Ermittlung mindestens eines Farbmesswerts nach dem Beizen des Flachprodukts;
- Erzeugen einer Ausgabeinformation anhand des mindestens einen Farbmesswerts, wobei die Ausgabeinformation indikativ für die Einhaltung von mindestens einer Vorgabe für den Farbmesswert ist; Ausgabe oder Auslösen der Ausgabe der

Ausgabeinformation, wobei die Ausgabeinformation charakteristisch für eine Notwendigkeit einer Fehlersuche und Durchführen der Fehlersuche ist; und wobei die Ausgabeinformation einen Hinweis darauf gibt, dass ein Fehler in der Prozessführung vorliegt, welcher nicht direkt auf die Zusammensetzung der mindestens einen Behandlungslösung zurückgeht.

Das Verfahren kann mit einer Vorrichtung zur Oberflächenbehandlung von Flachprodukten aus Aluminiumlegierungen durchgeführt werden, wobei die Vorrichtung umfasst: Mittel zum Beizen des Flachprodukts; eine Farbmesseinrichtung, welche zur Farbmessung an der Oberfläche des Flachprodukts zur Ermittlung mindestens eines Farbmesswerts nach dem Beizen des Flachprodukts eingerichtet ist; und eine Auswertungseinrichtung, welche dafür eingerichtet ist, eine Ausgabeinformation anhand des mindestens einen Farbmesswerts zu erzeugen, wobei die Ausgabeinformation indikativ für die Einhaltung von mindestens einer Vorgabe für den Farbmesswert ist und wobei die Auswertungseinrichtung dafür eingerichtet ist, die Ausgabeinformation auszugeben oder eine Ausgabe auszulösen.

Ferner kann das Verfahren auch durch eine Verwendung einer Farbmesseinrichtung bereitgestellt werden, welche zur Ermittlung mindestens eines Farbmesswerts eingerichtet ist, in einer Oberflächenbehandlung von Flachprodukten aus Aluminiumlegierungen, wobei anhand des mindestens einen Farbmesswerts eine Ausgabeinformation erzeugt wird und wobei die Ausgabeinformation indikativ für die Einhaltung von mindestens einer Vorgabe für den Farbmesswert ist.

Unter einem Flachprodukt wird insbesondere ein Band, eine Folie oder ein Blech aus Aluminium oder einer Aluminiumlegierung verstanden. Das Flachprodukt wird insbesondere durch ein Warmwalzen und/oder Kaltwalzen eines Walzbarrens und optional durch mindestens eine thermische Behandlung bereitgestellt. Ebenso kann ein Bandgießen mit anschließendem Kaltwalzen und mindestens einer optionalen thermischen Behandlung durchgeführt werden. Die Oberflächenbehandlung kann hierbei inline mit der Bereitstellung des Flachprodukts vorgenommen werden, beispielsweise kontinuierlich und im Anschluss an einen Warmwalzprozess und/oder Kaltwalzprozess.

Beispiele für Aluminiumlegierungen für das Flachprodukt sind Legierungen des Typs AA 3xxx, AA 5xxx, AA 6xxx und AA 8xxx, wobei das erfindungsgemäße Verfahren nicht auf diese Legierungstypen beschränkt ist. Beispielsweise kann das Flachprodukt aus einer Aluminiumlegierung des Typs AA 5182 oder einer Legierung des Typs AA 6016 bestehen.

Das Beizen des Flachprodukts wird mittels mindestens einer Behandlungslösung durchgeführt, wobei die Oberfläche des Flachprodukts zumindest teilweise in Kontakt mit der mindestens einen Behandlungslösung gebracht wird.

Das Beizen kann in Ausgestaltungen des Verfahrens in mehreren Verfahrensschritten anhand einer Kombination von mehreren Behandlungslösungen durchgeführt werden. Hierbei wird insbesondere zunächst mindestens ein Beizschritt und anschließend ein oder mehrere Spülschritte bzw. ein Dekapieren vorgenommen. Auch bei getrennten Verfahrensschritten kann das Beizen inline erfolgen und beispielsweise ein Band oder Blech kontinuierlich von einer Behandlungslösung zur nächsten Behandlungslösung und optional durch einen oder mehrere Spülschritte laufen.

Vor und/oder gleichzeitig mit dem Beizen kann eine Entfettung des Flachprodukts vorgenommen werden. Wird ein Entfettungsschritt vor dem eigentlichen Beizschritt durchgeführt, beispielsweise mit einer Reinigungsspülung, wird in einem solchen reinen Entfettungsschritt insbesondere im Wesentlichen kein Beizangriff vorgenommen.

Über das Durchführen einer Farbmessung an der Oberfläche des Flachprodukts wird mindestens ein Farbmesswert ermittelt. Der Farbmesswert ist zumindest teilweise indikativ für das Erscheinungsbild des Flachprodukts. Beispielsweise wird der Farbmessung eine definierte Lichtart zugrunde gelegt. Insbesondere wird eine Normlichtart zur Durchführung der Farbmessung verwendet, beispielsweise eine der Normlichtarten A, D50, D55, D65, D75, E, F2 oder F11, wie diese in DIN 5033 und DIN 6172 angegeben sind, so dass die Ergebnisse der Farbmessung auf einfache Weise übertragbar sind.

Mindestens eine Farbmessung wird nach dem Beizen und/oder während des Beizens des Flachprodukts durchgeführt, so dass der mindestens eine ermittelte Farbmesswert zur Prozessanalyse und/oder Prozesskontrolle herangezogen werden kann. Eine Ausgabeinformation wird anhand des mindestens einen Farbmesswerts erzeugt, wobei die Ausgabeinformation indikativ für die Einhaltung von mindestens einer Vorgabe für den Farbmesswert ist. Das Verfahren kann ein Prüfen umfassen, ob der Farbmesswert die mindestens eine Vorgabe einhält oder nicht.

Es wurde mit der Erfindung erkannt, dass sich anhand der Farbmessung am gebeizten Flachprodukt das Ergebnis der Behandlung prozesssicher und direkt bestimmen lässt. So können eine Belegung mit Walzrückständen als auch oberflächennahe Strukturen zu einer Veränderung des mindestens einen Farbmesswerts im Vergleich zu einer vollständig behandelten Oberfläche der Aluminiumlegierung führen. Walzrückstände können beispielsweise verbliebenes Walzöl und Partikel sein. Oberflächennahe Strukturen können beispielsweise eine mit der Herstellung des Flachprodukts entstandene mikrokristalline Oxidschicht, eingewalzte Partikel, Anreicherungen und Ausscheidungen von Legierungsbestandteilen nahe der Oberfläche sein.

Abweichend von denen im Stand der Technik bekannten Verfahren zur Prozesskontrolle, welche auf einer Überwachung von Parametern der mindestens einen Behandlungslösung wie beispielsweise dem pH-Wert und der elektrischen Leitfähigkeit beruhen, wird mit dem erfindungsgemäßen Verfahren eine Prozesskontrolle anhand eines optischen Indikators für das tatsächlich erreichte Beizergebnis ermöglicht. Der Behandlungserfolg und insbesondere ein ausreichender Beizangriff kann anhand des mindestens einen Farbmesswerts mit hoher Zuverlässigkeit beurteilt werden. Hierbei können auch verdeckte Abweichungen in der Oberflächenbehandlung, welche nicht ohne weiteres anhand der Überwachung globaler Parameter zu erkennen sind, festgestellt werden, da sich Beeinträchtigungen des Beizergebnisses im Farbmesswert niederschlagen. Insbesondere kann auch die eingangs geschilderte Problematik eines Erkennens einer "einschlafenden" Behandlungslösung gelöst werden, da nicht bloß einzelne globale Kennwerte der mindestens einen Behandlungslösung überwacht werden, sondern vielmehr die Qualität des behandelten Flachprodukts unmittelbar erkennbar wird.

Auch Fehler in der Prozessführung, welche nicht direkt auf die Zusammensetzung der mindestens einen Behandlungslösung zurückgehen, können anhand der Farbmessung erkannt werden, da das Verfahren insbesondere nicht alleine auf eine Analytik der Beizlösung selbst vertraut, sondern vielmehr zusätzlich die tatsächliche Wirkung der richtig eingestellten Beizlösung überprüft. Beispiele für Fehler in der Prozessführung, welche nicht direkt auf die Zusammensetzung der mindestens einen Behandlungslösung zurückgehen, können mangelnder Sprühauftrag aufgrund von zu geringem Druck, eine defekte Pumpe oder eine defekte Sprüheinrichtung sein.

Ein Beispiel für eine Ausgabeinformation ist eine direkte Information über den Farbmesswert oder eine Wiedergabe des Farbmesswerts, wobei der Farbmesswert indikativ für das Ergebnis des Beizens des Flachprodukts ist. Eine mögliche Vorgabe für einen Farbmesswert ist beispielsweise ein Einhalten, ein Überschreiten, ein Unterschreiten und/oder ein Abweichen von einem vorgegebenen Wert und/oder mindestens einem Intervall von Werten sowie ein Einhalten einer vorgegebenen Steigerung oder Reduzierung eines Farbmesswerts. Die Ausgabeinformation kann beispielsweise ein solches Einhalten, ein Überschreiten, ein Unterschreiten und/oder ein Abweichen signalisieren bzw. eine Visualisierung hiervon ermöglichen.

Der Farbmesswert kann repräsentativ für eine Helligkeit, einen Farbton und/oder eine Farbsättigung sein. Der Farbmesswert kann insbesondere auf Grundlage eines Farbraums ermittelt werden. Als Farbraum können verschiedene Farbräume herangezogen werden, etwa der CIELAB-Farbraum bzw. L^{∗}a^{∗}b^{∗}-Farbraum, welcher im CIE-Normsystem ausgedrückt wird. Als Koordinaten des CIELAB-Farbraums können beispielsweise die "CIELAB"-Koordinaten verwendet werden. Zur weiteren Definition des CIELAB-Farbraums wird auch auf die DIN EN ISO 11664 und insbesondere Teil 4 der Norm verwiesen. Mit der Farbmessung wird beispielsweise eine oder mehrere der Koordinaten L^{∗}, a^{∗} und b^{∗} bestimmt.

In einer Ausgestaltung der Erfindung wird eine visuelle Ausgabe der Ausgabeinformation bewirkt oder ausgelöst. Auf diese Weise kann die Ausgabeninformation vorteilhafterweise einfach und verständlich wiedergegeben werden. Der Farbmesswert kann unmittelbar angezeigt werden, beispielsweise indem mindestens eine Koordinate L^{∗}, a^{∗} und b^{∗} des CIELAB-Farbraums und/oder mindestens einer Koordinate eines weiteren Farbraums auf einer Ausgabevorrichtung wie einem Display angezeigt wird.

Eine visuelle Ausgabe kann jedoch auch andere Formen annehmen. Beispielsweise kann ein Warnsystem vorgesehen sein, welches auf eine Abweichung von der mindestens einen Vorgabe hinweist. Hierbei kann eine akustische und/oder optische Warnung insbesondere an der Vorrichtung zur Oberflächenbehandlung ausgegeben oder eine Ausgabe bewirkt werden. Beispielsweise wird mindestens einer an der Vorrichtung befindlichen Person anhand einer akustischen und/oder optischen Warnung kenntlich gemacht, dass eine Abweichung von der mindestens einen Vorgabe vorliegt. Eine akustische und/oder optische Warnung kann ebenso extern ausgegeben oder eine Ausgabe bewirkt werden.

In einer Ausführungsform ist als Warnsystem ein Ampelsystem vorgesehen, wobei dieses eine Einhaltung der mindestens einen Vorgabe mit einer ersten Ausgabe signalisiert und eine Abweichung von der mindestens einen Vorgabe mit einer zweiten Ausgabe signalisiert, welche von der ersten Ausgabe verschieden ist. Eine Einhaltung der mindestens einen Vorgabe kann beispielsweise mit einem grünen Licht signalisiert werden, während eine Abweichung von der mindestens einen Vorgabe beispielsweise mit einem gelben Licht signalisiert werden kann. Optional kann eine dritte Ausgabe vorgesehen sein, welche eine kritische Abweichung von der mindestens einen Vorgabe signalisiert. Die dritte Ausgabe kann beispielsweise mit rotem Licht signalisiert werden. Es kann weiter vorgesehen sein, dass die Oberflächenbehandlung automatisch unterbrochen wird, wenn eine kritische Abweichung von der mindestens einen Vorgabe vorliegt.

Erfindungsgemäß ist die Ausgabeinformation charakteristisch für eine Notwendigkeit einer Fehlersuche. Die Fehlersuche kann die Suche nach Fehlern in der mindestens einen Behandlungslösung und Fehlern der Prozessführung, welche nicht direkt auf die Zusammensetzung der mindestens einen Behandlungslösung zurückgeht, umfassen. Durch die Fehlersuche werden vorteilhafterweise auch Fehler erkannt, die nicht durch die Überprüfung der globalen Parameter erkannt werden können. Der Inhalt der Ausgabeinformation bezieht sich hierbei auf einen Zustand, insbesondere einen internen Zustand, der Behandlungsvorrichtung und ermöglicht somit insbesondere eine prozesssichere Durchführung der Behandlung des Flachprodukts. Da die Farbmessung insbesondere indikativ für das Ergebnis der Behandlung ist, wird der sich dynamisch ändernde Zustand der Behandlungsvorrichtung bzw. des Behandlungsverfahrens erkannt. Eine Auswertung der Farbmessung bzw. eine Erzeugung der Ausgabeinformation dahingehend, ob eine Fehlersuche notwendig ist, kann in einer Ausgestaltung des Verfahrens durch eine Vorrichtung durchgeführt werden.

Gemäß einer weiteren Ausgestaltung der Erfindung kann über die Ausgabeinformation eine Interaktion mit dem Behandlungsverfahren zur Vermeidung technischer Störungen erfolgen. Hierbei ermöglicht das Verfahren die Erkennung von Störungen über Abweichungen der globalen Parameter, beispielsweise der Behandlungsparameter wie pH-Wert und elektrische Leitfähigkeit der mindestens einen Behandlungslösung hinaus. Auch Fehler in der Prozessführung, welche nicht direkt auf die Zusammensetzung der mindestens einen Behandlungslösung zurückgehen, können anhand der Farbmessung erkannt werden. Beispielsweise können auch mechanische Fehler in der Behandlungsvorrichtung zu einer Abweichung von der mindestens einen Vorgabe in der Farbmessung führen und die Ausgabeinformation die Notwendigkeit einer Fehlersuche anzeigen. Bei einem Einhalten der mindestens einen Vorgabe für die Farbmesswerte kann die Ausgabeinformation vermitteln, dass keine Fehlersuche notwendig ist.

Erfindungsgemäß umfasst das Verfahren weiter ein Durchführen der Fehlersuche. Das Durchführen der Fehlersuche kann über die Ausgabeinformation ausgelöst werden, wenn die Ausgabeinformation die Notwendigkeit einer Fehlersuche anzeigt. Die Fehlersuche kann hierbei manuell, beispielsweise durch mindestens eine Person, teilweise automatisch oder automatisch, beispielsweise durch mindestens eine Vorrichtung, durchgeführt werden. Durch das Durchführen der Fehlersuche kann vorteilhafterweise die Prozessstabilität schnell wieder hergestellt werden, da Fehler identifiziert und behoben werden.

In einer weiteren Ausgestaltung der Erfindung ist die Ausgabeinformation weiter charakteristisch dafür, ob mindestens ein Vorgabeparameter der mindestens einen Behandlungslösung für das Beizen des Flachprodukts eingehalten wird. Somit kann insbesondere die Fehlersuche erleichtert werden. Ist die Ausgabeinformation charakteristisch dafür, dass mindestens ein Vorgabeparameter der mindestens einen Behandlungslösung nicht eingehalten wird, so kann die Fehlersuche beispielsweise auf die Einstellung der mindestens einen Behandlungslösung eingegrenzt oder die Einstellung der mindestens einen Behandlungslösung in der Fehlersuche priorisiert werden.

Erfindungsgemäß kann die Ausgabeinformation einen Hinweis darauf geben, dass ein Fehler in der Prozessführung vorliegt, welcher nicht direkt auf die Zusammensetzung der mindestens einen Behandlungslösung zurückgeht. Hierzu kann die Ausgabeinformation charakteristisch dafür sein, dass mindestens ein Vorgabeparameter der mindestens einen Behandlungslösung eingehalten wird. Vorteilhafterweise kann die Fehlersuche in diesem Fall auf die Prozessführung fokussiert werden und der Fehler schneller aufgefunden werden. Die Ausgabeinformation kann somit insbesondere indikativ für einen mechanischen Defekt sein. Beispielsweise können ein mangelnder Sprühauftrag, eine defekte Pumpe und/oder eine defekte Sprüheinrichtung vorliegen. Ein mangelnder Sprühauftrag kann beispielsweise aufgrund eines zu geringen Drucks vorliegen.

In einer Ausgestaltung der Erfindung wird das Durchführen der Farbmessung inline mit dem Beizen des Flachprodukts vorgenommen. Insbesondere wird eine kontinuierliche Farbmessung durchgeführt, beispielsweise am laufenden Flachprodukt, insbesondere am laufenden Band oder Blech. Die Farbmessung ermöglicht hierbei einen direkten Rückschluss auf das Ergebnis der laufenden Behandlung, so dass etwaige Abweichungen des Ergebnisses des Beizens ermittelt und zeitnah zu einer geeigneten Anpassung der Behandlung herangezogen werden können, beispielsweise zu einer Anpassung von Behandlungsparametern oder zum Auslösen einer Unterbrechung der Behandlung.

Insbesondere wird eine Farbmessung und/oder ein Erzeugen der Ausgabeinformation in regelmäßigen oder unregelmäßigen Zeitintervallen durchgeführt. Beispielsweise erfolgen Farbmessungen und/oder ein Erzeugen der Ausgabeinformation in Zeitabständen von höchstens 1 h, insbesondere höchstens 10 min und weiter insbesondere von höchstens 1 min, so dass eine im Wesentlichen kontinuierliche Überwachung des Behandlungsergebnisses erreicht wird.

Das Durchführen der Farbmessung kann auch at-line mit dem Beizen des Flachprodukts vorgenommen werden. Beispielsweise werden einzelne behandelte Flachprodukte, etwa einzelne Bänder, Bleche und/oder hieraus entnommene Proben einer Farbmessung unterworfen, während die Oberflächenbehandlung weiterläuft. Auch hiermit kann das Ergebnis der Behandlung überprüft und bei Abweichungen der mindestens einen Vorgabe zeitnah in die laufende Behandlung eingegriffen werden.

Möglich ist auch, dass zur Prozesskontrolle eine Farbmessung des Flachprodukts offline durchgeführt wird, wobei beispielsweise einzelne Bänder, Bleche und/oder hieraus entnommene Proben von bereits abgeschlossenen Behandlungen untersucht werden.

In einer Ausgestaltung der Erfindung werden mehrere Farbmessungen durchgeführt. Beispielsweise können mindestens zwei Farbmessungen an der gleichen Stelle des Verfahrens durchgeführt werden, um verschiedene Positionen des Flachprodukts zu vermessen, beispielsweise über die Lauflänge des Bands und/oder entlang der Breite des Bands oder Blechs. Hiermit kann die Gleichmäßigkeit der Oberflächenbehandlung geprüft werden, insbesondere die Gleichmäßigkeit der Oberflächenbehandlung über die Breite des Flachprodukts.

Ebenso können mehrere Farbmessungen vorgesehen sein, welche beispielsweise mindestens eine Farbmessung zwischen verschiedenen Verfahrensschritten des Beizens durchführen. Somit kann auch das Zwischenergebnis des Beizens am Flachprodukt über eine Farbmessung geprüft und die Prozesskontrolle bei Beizprozessen mit mehreren Schritten verbessert werden.

In einer Ausgestaltung der Erfindung wird das Beizen des Flachprodukts mit mindestens einer Behandlungslösung durchgeführt und die mindestens eine Behandlungslösung enthält mindestens zwei Säuren oder mindestens zwei Basen. Folglich sind mehrere Säuren oder Basen vorhanden, welche einen Beizangriff auf die Oberfläche des Flachprodukts mittelbar oder unmittelbar bewirken können. Beispielsweise enthält die mindestens eine Behandlungslösung mindestens zwei verschiedene Mineralsäuren, beispielsweise H₂SO₄ und HF. Bei der mindestens einen Behandlungslösung umfassend mindestens zwei Säuren oder Basen ist eine Überwachung der globalen Parameter wie beispielsweise pH-Wert und/oder elektrischer Leitwert problematisch, da hiermit nur bedingt Aussagen über die Konzentration und Wirkung der einzelnen Säure oder Base gemacht werden können. Mit dem Durchführen einer Farbmessung an der Oberfläche des Flachprodukts kann es jedoch möglich sein, eine Aussage über die Wirkung der einzelnen Säure bzw. Base zu treffen. Beispielsweise kann die Ausgabeinformation indikativ für die Konzentration einer Säure bzw. Base sein und/oder indikativ für das Verhältnis der Konzentration zwischen mindestens zwei Säuren oder Basen sein. Die Konzentration einer Säure kann beispielsweise die Konzentration von HF in der mindestens einen Behandlungslösung aufweisend H₂SO₄ und HF sein.

Erfolgt gemäß einer Ausgestaltung das Beizen des Flachprodukts mindestens teilweise unter einer chemischen Reaktion, wobei in der chemischen Reaktion mindestens ein selbstinhibierender Prozess auftritt, kann mit dem erfindungsgemäßen Verfahren vorteilhafterweise die Wirkung des Beizens beurteilt werden, während mit globalen Parametern wie pH-Wert, elektrischer Leitwert, die Al-Konzentration und/oder die Konzentration einzelner Komponenten der mindestens einen Behandlungslösung möglicherweise keine gesicherte Aussage über die Wirksamkeit der Beizbehandlung möglich ist. Unter einem selbstinhibierenden Prozess wird hierbei eine chemische Reaktion verstanden, bei welcher Zwischenprodukte und/oder Endprodukte der Reaktion den Beizangriff der mindestens einen Behandlungslösung vermindern und/oder verlangsamen, beispielsweise durch eine Reaktion der Zwischen- und/oder Endprodukte mit einer Säure oder Base der mindestens einen Behandlungslösung und/oder durch eine Belegung der Oberfläche des Flachprodukts.

Ebenfalls kann in einer Ausgestaltung der Erfindung die Ausgabeinformation indikativ für den Grad des selbstinhibierenden Prozesses sein. Es hat sich herausgestellt, dass über den Grad des selbstinhibierenden Prozesses die Qualität der Beizung einfach überwacht werden kann. Beispielsweise kann hierfür der mindestens eine Farbmesswert mit mindestens einem globalen Parameter oder mit mindestens einem Parameter der mindestens einen Behandlungslösung abgeglichen werden.

Gemäß einer weiteren Ausgestaltung wird mindestens eine Konzentration einer Komponente der mindestens einen Behandlungslösung überwacht, wobei bei Abweichungen der Ausgabeinformation von der mindestens einen Vorgabe auf den Grad eines selbstinhibierenden Prozesses geschlossen werden kann. Auf diese Weise kann vorteilhafterweise bei der Fehlersuche schnell entschieden werden, ob die Ausgabeinformation auf einen selbstinhibierenden Prozess oder eine fehlende Komponente der mindestens einen Behandlungslösung zurückzuführen ist. Die Konzentration einer Komponente der mindestens einen Behandlungslösung kann beispielsweise eine Säurekonzentration oder eine Laugenkonzentration sein.

In einer Ausgestaltung der Erfindung wird die Farbmessung der Oberfläche im CIE L^{∗}a^{∗}b^{∗}-Farbraum unter Ausschluss der direkten Reflektion in 45°/0°-Geometrie bei Verwendung einer Normlichtart D65 und einem Beobachtungswinkel von 10° durchgeführt und insbesondere als Farbmesswert mindestens eine der Koordinaten L^{∗}, a^{∗} und b^{∗} bestimmt.

In einer nächsten Ausgestaltung der Erfindung umfasst das Erzeugen der Ausgabeinformation einen Vergleich des mindestens einen Farbmesswerts mit mindestens einem Referenzwert. Beispielsweise ist mindestens ein Referenzwert hinterlegt und eine Auswertungseinrichtung ist zu einem Vergleich des mindestens einen Farbmesswerts mit mindestens einem Referenzwert eingerichtet. Eine Vorgabe für den Farbmesswert kann beispielsweise sein, dass mindestens ein Referenzwert eingehalten, überschritten, unterschritten und/oder eine Abweichung von dem mindestens einen Referenzwert vorliegt. Ebenso kann anhand des mindestens einen Referenzwerts geprüft werden, ob der mindestens eine Farbmesswert einen sich innerhalb oder außerhalb eines durch Referenzwerte vorgegebenen Intervalls befindet.

In einer weiteren Ausgestaltung wird der mindestens eine Referenzwert zumindest teilweise in Abhängigkeit der Aluminiumlegierung des Flachprodukts, der Abmessungen des Flachprodukts, der Oberflächenstruktur des Flachprodukts und/oder der Herstellung des Flachprodukts vorgegeben. Vorteilhafterweise kann somit das Verfahren bzw. die Vorrichtung auf einfache Weise für verschiedene Flachprodukte verwendet werden. Beispielsweise sind für verschiedene Flachprodukte verschiedene Referenzwerte hinterlegt, insbesondere in einer Datenbank. Hiermit kann berücksichtigt werden, dass verschiedene Flachprodukte auch verschiedene Anforderungen an die Oberfläche erfüllen müssen. Beispielsweise kann je nach Verwendungszweck zwischen Innenanwendungen, Außenhautanwendungen, Strukturanwendungen und/oder dekorativen Anwendungen unterschieden werden.

Insbesondere ist der mindestens eine Referenzwert indikativ für eine Helligkeit, einen Farbton und/oder eine Farbsättigung. Insbesondere ist ein Mindestwert und/oder Maximalwert für die Helligkeit, den Farbton und/oder die Farbsättigung angegeben. Beispielsweise ist ein Mindestwert und/oder Maximalwert für eine oder mehrere der CIELAB-Koordinaten L^{∗}, a^{∗} und b^{∗} vorgegeben.

Der Vergleich des mindestens einen Farbmesswerts mit dem mindestens einen Referenzwert kann die Bestimmung einer Helligkeitsdifferenz und/oder die Bestimmung eines Farbabstands umfassen. Eine Helligkeitsdifferenz wird beispielsweise über die Differenz der Luminanz L^{∗} zwischen dem Farbmesswert und dem Referenzwert bestimmt. Der Farbabstand wird beispielsweise über den euklidischen Farbabstand ΔE gebildet, wobei ΔE=[(ΔL^{∗})² + (Δa^{∗})² + (Δb^{∗})²]^{1/2} beträgt. Für den Farbabstand ΔE und/oder die Helligkeitsdifferenz ΔL kann beispielsweise auch ein Mindestwert oder Maximalwert einzuhalten sein.

Das Verfahren kann weiter ein Bestimmen mindestens eines Referenzwerts umfassen, beispielsweise an einem behandelten Flachprodukt, welches den Anforderungen an das Ergebnis der Behandlung genügt.

In einer nächsten Ausgestaltung der Erfindung umfasst das Verfahren weiter: Durchführen einer vorhergehenden Farbmessung an der Oberfläche des Flachprodukts vor dem Beizen und/oder zwischen Beizschritten zur Ermittlung mindestens eines vorhergehenden Farbmesswerts, wobei das Erzeugen der Ausgabeinformation weiter anhand des mindestens einen vorhergehenden Farbmesswerts vorgenommen wird. Die Vorrichtung gemäß dem zweiten Aspekt kann eine vorhergehende Farbmesseinrichtung aufweisen, welche zur Farbmessung an der Oberfläche des Flachprodukts vor dem Beizen und/oder zwischen Behandlungsschritten bzw. Beizschritten eingerichtet ist. Eine vorhergehende Farbmessung kann hierbei einen Vergleich des Erscheinungsbilds vor und nach der Oberflächenbehandlung bzw. vor und nach einzelnen Schritten der Oberflächenbehandlung liefern. Somit kann der Einfluss der Oberflächenbehandlung durch einen direkten Vergleich geprüft werden.

Die mindestens eine Vorgabe für den Farbmesswert kann beispielsweise durch den vorhergehenden Farbmesswert beeinflusst werden. Beispielsweise kann eine Vorgabe sein, dass eine bestimmte Differenz zwischen dem Farbmesswert und dem vorhergehenden Farbmesswert eingehalten, überschritten und/oder unterschritten wird. Wird mindestens ein Referenzwert herangezogen, kann der mindestens eine Referenzwert beispielsweise indikativ für ein Kriterium eines Vergleichs des Farbmesswerts mit dem vorhergehenden Farbmesswert sein.

In einer Ausgestaltung wird ein Flachprodukt aus einer Aluminiumlegierung des Typs AA 5xxx, insbesondere AA 5182 behandelt, wobei eine Luminanz L^{∗} von mindestens 58, insbesondere mindestens 60 eingestellt wird. Entsprechend kann mindestens eine Vorgabe an den Farbmesswert sein, dass eine Luminanz L^{∗} von mindestens 58, insbesondere mindestens 60 eingehalten wird. Beispielsweise wird mindestens ein Behandlungsparameter des Beizens verändert, bis die Luminanz L^{∗} mindestens 58, insbesondere mindestens 60 beträgt. Ein Behandlungsparameter des Beizens kann beispielsweise eine Konzentration einer Chemikalie in der mindestens einen Behandlungslösung sein. Es wurde erkannt, dass sich die Qualität der behandelten Oberfläche und insbesondere die Vollständigkeit der Oberflächenbehandlung bei Legierungen des Typs AA 5xxx, insbesondere AA 5182 anhand der Luminanz L^{∗} prozesssicher erkennen lassen. Ein Mindestwert der Luminanz L^{∗} von 58, insbesondere von 60 weist hierbei auf eine optimale Oberflächenbehandlung hin. Die Farbmessung wird hierbei im CIE L^{∗}a^{∗}b^{∗}-Farbraum unter Ausschluss der direkten Reflektion in 45°/0°-Geometrie bei Verwendung einer Normlichtart D65 und einem Beobachtungswinkel von 10° durchgeführt.

In einer alternativen Ausgestaltung wird ein Flachprodukt aus einer Aluminiumlegierung des Typs AA 6xxx, insbesondere AA 6016 behandelt, wobei eine Luminanz L^{∗} von mindestens 62, insbesondere mindestens 64 eingestellt wird. Entsprechend kann mindestens eine Vorgabe an den Farbmesswert sein, dass eine Luminanz L^{∗} von mindestens 62, insbesondere mindestens 64 eingehalten wird. Für Aluminiumlegierungen des Typs AA 6xxx, insbesondere AA 6016, ergibt sich mit einer optimalen Oberflächenbehandlung ein im Vergleich zu den Legierungen des Typs AA 5xxx ein höherer Minimalwert für die Luminanz L^{∗} von 62 und insbesondere von 64. Die Farbmessung wird hierbei im CIE L^{∗}a^{∗}b^{∗}-Farbraum unter Ausschluss der direkten Reflektion in 45°/0°-Geometrie bei Verwendung einer Normlichtart D65 und einem Beobachtungswinkel von 10° durchgeführt.

In einer weiteren Ausgestaltung wird das Beizen mittels mindestens einer alkalischen Behandlungslösung vorgenommen, insbesondere mittels mindestens einer alkalischen Behandlungslösung umfassend NaOH und/oder Tenside. Beispielsweise wird mindestens eine wässrige Behandlungslösung verwendet. Natriumhydroxid kann der mindestens einen wässrigen Behandlungslösung so hinzugegeben werden, dass die Konzentration von Natriumhydroxid in der mindestens einen wässrigen Behandlungslösung 0,01 bis 5 Gew.-%, bevorzugt 0,1 bis 1,5 Gew.-%, besonders bevorzugt 0,5 bis 0,7 Gew.-% beträgt. Tenside können mit Konzentrationen von 0,1 bis 1,0 Gew.-%, bevorzugt 0,3 bis 0,6 Gew.-% verwendet werden. Die mindestens eine wässrige Behandlungslösung kann optional weiter 1,5 bis 3 Gew.-% einer Zusammensetzung aus 5 - 40 Gew.-% Natriumtripolyphosphat, 3 - 10 Gew.-% Natriumglukonat, 3 - 8 Gew.-% einer Zusammensetzung aus nichtionischen und anionischen Tensiden und wahlweise 0,5 - 70 Gew.-% Natriumkarbonat, bevorzugt 30 - 70 Gew.-% Natriumkarbonat enthalten. Entsprechende Behandlungslösungen haben sich als besonders effektiv in der Entfettung und Entfernung von Oberflächenanreicherungen erwiesen. Die Zugabe an Natriumkarbonat kann zur Einstellung des pH-Werts der mindestens einen Behandlungslösung anstelle der Natronlauge dienen. Die Zusammensetzung kann beispielsweise innerhalb der genannten Bereiche in Abhängigkeit des mindestens einen Farbmesswerts variiert werden, wenn eine Abweichung von mindestens einer Vorgabe für den Farbmesswert durch die Ausgabeinformation vermittelt wird. Auch kann in Abhängigkeit des mindestens einen Farbmesswerts die Temperatur des Behandlungsbads, die Kontaktzeit und/oder der Spritzdruck erhöht oder verringert werden.

In einer weiteren Ausgestaltung umfasst das Beizen eine Behandlung mittels mindestens einer sauren Behandlungslösung, insbesondere mittels mindestens einer sauren Behandlungslösung umfassend eine Mineralsäure und optional unter Zusatz mindestens eines Komplexbildners und/oder optional unter Zusatz mindestens eines Tensids.

Gemäß einer Ausgestaltung umfasst das Beizen eine Spülung. Beispielsweise wird ein Beizen mittels mindestens einer alkalischen Behandlungslösung vorgenommen, beispielsweise wie zuvor beschrieben, wobei anschließend eine saure Spülung bzw. ein Dekapieren des mit der mindestens einen alkalischen Behandlungslösung behandelten Flachprodukts vorgenommen wird. Abschließend kann mindestens ein Spülschritt mit entsalztem und/oder vollentsalztem Wasser erfolgen.

Als Mineralsäuren können unter anderem H₂SO₄, HNO₃ und HCl verwendet werden. Die Konzentration der Mineralsäure beträgt insbesondere 1 bis 10 Gew.-%, bevorzugt 2,5 bis 3,5 Gew.-%. Als komplexierende Mineralsäuren kommen beispielsweise HF sowie H₃PO₄ zum Einsatz. Die Konzentration von HF kann beispielsweise im Bereich von 20ppm bis 3 Gew.-% liegen. Die Konzentration von H₃PO₄ kann beispielsweise im Bereich von 0,1% bis 20 Gew.-%liegen. Möglich ist ebenso die Verwendung von kurzkettigen Karbonsäuren wie beispielsweise Ameisensäure.

Als Komplexbildner können unter anderem Fluoride, Citrate, Oxalate oder Phosphate verwendet werden. Komplexbildner wie Fluoride können insbesondere mit Konzentrationen von 100 bis 1500 mg/l, bevorzugt mit 300 bis 600 mg/l verwendet werden.

In einer weiteren Ausgestaltung wird zusätzlich mindestens ein Behandlungsparameter des Beizens zumindest teilweise anhand des mindestens einen Farbmesswerts geregelt. Beispielsweise wird eine Auswertung des mindestens einen Farbmesswerts vorgenommen und mindestens ein Behandlungsparameter wird anhand der Auswertung beibehalten oder verändert. Eine Regelung kann hierbei manuell oder teilweise automatisiert erfolgen.

Soweit das Beizen mehrere Verfahrensschritte umfasst, können auch einzelne Beizschritte unabhängig voneinander manuell oder teilweise automatisiert geregelt werden, beispielsweise mittels vorhergehenden Farbmessungen zwischen Behandlungsschritten bzw. Beizschritten. In Ausgestaltungen des Verfahrens können auch die Behandlungsparameter eines Beizschrittes konstant gehalten werden, während die Behandlungsparameter des weiteren Beizschrittes anhand der Farbmessung geregelt werden. So wird beispielsweise ein Beizschritt mit konstanten bzw. manuell eingestellten Behandlungsparametern durchgeführt und mindestens ein Behandlungsparameter einer nachfolgenden (sauren) Spülung anhand der Farbmessung geregelt. Umgekehrt kann auch mindestens ein Behandlungsparameter des Beizschrittes anhand der Farbmessung geregelt und eine (saure) Spülung mit konstanten bzw. manuell eingestellten Behandlungsparametern durchgeführt werden.

In einer nächsten Ausgestaltung der Erfindung wird mindestens ein Behandlungsparameter geregelt, welcher indikativ für mindestens eine Laugenkonzentration, mindestens eine Säurekonzentration, mindestens eine Fluoridkonzentration, mindestens eine Tensidkonzentration, eine Geschwindigkeit des Flachprodukts relativ zu der mindestens einen Behandlungslösung, eine Temperatur der mindestens einen Behandlungslösung, einen Spritzdruck der mindestens einen Behandlungslösung und/oder das Volumen der mindestens einen Behandlungslösung ist.

Mit der mindestens einen Säurekonzentration und/oder mindestens einen Laugenkonzentration kann typischerweise die Reaktionsgeschwindigkeit beeinflusst werden. Insbesondere kann eine Korrelation von Farbmesswerten mit der Säurekonzentration und/oder Laugenkonzentration vorliegen. Beispielsweise können jeweils höhere Säurekonzentrationen und/oder Laugenkonzentrationen tendenziell zu höheren Helligkeitswerten bzw. Luminanzen oder zu bestimmten Farbtönen führen, welche charakteristisch für eine vollständig behandelte Oberfläche sind. Die mindestens eine Säurekonzentration und/oder mindestens eine Laugenkonzentration kann somit beispielsweise anhand des mindestens einen Farbmesswerts optimiert werden, etwa indem eine manuelle oder teilweise automatisierte Regelung vorgenommen wird.

Auf ähnliche Weise können mindestens eine Fluoridkonzentration und/oder mindestens eine Tensidkonzentration eine Korrelation mit dem mindestens einen Farbmesswert aufweisen. Beispielsweise führen auch hier jeweils höhere Fluoridkonzentrationen und/oder Tensidkonzentrationen tendenziell zu höheren Helligkeitswerten oder zu bestimmten Farbtönen, welche charakteristisch für eine vollständig behandelte Oberfläche sind.

Ab bestimmten Säurekonzentrationen und/oder Laugenkonzentrationen kann eine Verminderung des Effekts des Beizens erfolgen, etwa wenn eine vollständige Reinigung und Abtragung der Oberfläche erfolgt, so dass die Eigenschaften der sichtbaren Oberfläche im Wesentlichen durch die Eigenschaften des Kerns des Flachprodukts bestimmt werden. Dieser Effekt kann ebenfalls über die erfindungsgemäße Farbmessung ermittelt werden, so dass eine unnötig hohe Säurekonzentration und/oder Laugenkonzentration vermieden und damit Chemikalien eingespart werden können.

Die Laugenkonzentration, Säurekonzentration, Fluoridkonzentration und/oder Tensidkonzentration werden insbesondere so geregelt, dass ein optimierter Farbmesswert erhalten und optional gleichzeitig die jeweilige Konzentration möglichst gering gehalten wird, um den Chemikalienverbrauch zu reduzieren. Ein optimierter Farbmesswert kann beispielsweise repräsentative für eine möglichst vollständig behandelte Oberfläche sein. Ebenso kann mit der Regelung der Konzentrationen beispielsweise eine konstante Behandlungsgeschwindigkeit eingehalten werden, um eine gleichlaufende Produktion zu gewährleisten. Eine konstante Behandlungsgeschwindigkeit und damit eine konstante Kontaktzeit mit der mindestens einen Behandlungslösung kann beispielsweise eine konstante Durchlaufgeschwindigkeit eines Bands durch ein Bad sein.

Unter einer Geschwindigkeit des Flachprodukts relativ zu der mindestens einen Behandlungslösung wird beispielsweise Geschwindigkeit des Flachprodukts relativ zu einem Bad mit einer Behandlungslösung oder zu einer Sprüheinrichtung verstanden. Das Volumen der mindestens einen Behandlungslösung repräsentiert insbesondere ein aufgesprühtes Volumen eines Sprühauftrags der mindestens einen Behandlungslösung. Mit der Fördermenge der Pumpen kann der Spritzdruck geregelt werden. Hierdurch ergibt sich eine mögliche Energieeinsparung bei der Durchführung des Verfahrens.

In einer Ausgestaltung wird mindestens ein Behandlungsparameter mit höherer Helligkeitsdifferenz und/oder höherem Farbabstand vergrößert und/oder mit niedrigerer Helligkeitsdifferenz und/oder niedrigerem Farbabstand verkleinert. Wenn der Referenzwert beispielsweise bestimmten Zielvorgaben entspricht, können insbesondere die mindestens eine Laugenkonzentration, die mindestens eine Säurekonzentration, die mindestens eine Fluoridkonzentration und/oder die mindestens eine Tensidkonzentration angepasst werden, um eine Helligkeitsdifferenz und/oder einen Farbabstand zu minimieren. Die bestimmten Zielvorgaben können beispielsweise ein Farbmesswert einer vollständig behandelten Oberfläche sein. Insbesondere führen höhere Konzentrationen typischerweise zu einer schnelleren Reaktion, so dass bei größeren Abweichungen der Helligkeit und/oder der Farbe die Konzentration erhöht werden kann. Wird der Behandlungsparameter und insbesondere die Konzentration bei niedrigeren Helligkeitsdifferenzen und/oder niedrigeren Farbabständen verringert, können Chemikalien eingespart werden.

In weiteren Ausgestaltungen der Erfindung sind die Mittel zum Beizen des Flachprodukts als Behandlungsbad und/oder als Sprüheinrichtung ausgestaltet. Beispielsweise ist das Flachprodukt als Band ausgestaltet, wobei das Band ein Bad mit der mindestens einen Behandlungslösung durchläuft. Ebenso können als Bleche ausgestaltete Flachprodukte in ein Bad eingetaucht werden. Eine Sprüheinrichtung kann für einen Sprühauftrag der mindestens einen Behandlungslösung auf mindestens eine Seite des Flachprodukts eingerichtet sein. Beispielsweise wird ein Sprühauftrag auf mindestens eine Seite eines laufenden Flachprodukts gebracht, beispielsweise eines laufenden Bands oder Blechs.

Weitere Ausgestaltungen und Vorteile der Erfindung sind in der folgenden detaillierten Beschreibung einiger beispielhafter Ausführungsformen der vorliegenden Erfindung, insbesondere in Verbindung mit der Zeichnung, zu entnehmen. Die Zeichnung zeigt in
- Fig. 1: eine schematische Darstellung eines Ausführungsbeispiels einer erfindungsgemäßen Vorrichtung; und
- Fig. 2: ein schematisches Diagramm über die Abhängigkeit der erzielten Luminanz in Abhängigkeit eines Behandlungsparameters.

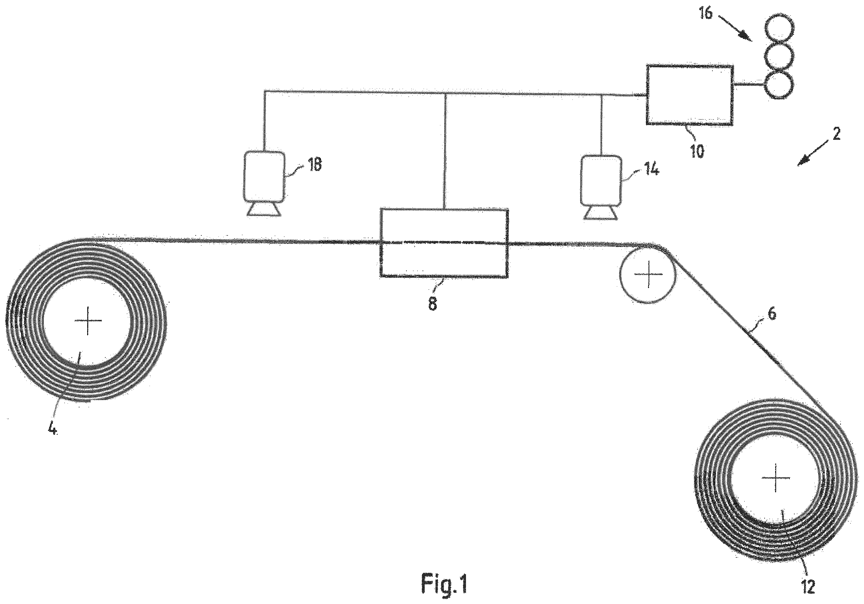

Fig. 1 zeigt eine schematische Darstellung eines Ausführungsbeispiels einer erfindungsgemäßen Vorrichtung 2. Die Vorrichtung 2 weist einen ersten Haspel 4 auf, von welchem ein als Aluminiumlegierungsband ausgestaltetes Flachprodukt 6 abgewickelt wird. Mittel 8 zum Beizen des Flachprodukts 6 sind vorgesehen, welche als Tauchbad und/oder als Sprüheinrichtung ausgestaltet sind, wobei das Flachprodukt 6 in Kontakt zu mindestens einer Behandlungslösung zum Beizen kommt.

Das Beizen wird mittels mindestens einer alkalischen Behandlungslösung umfassend NaOH und Tenside durchgeführt, wobei die Konzentration für NaOH von 0,5 bis 0,7 Gew.-% und für die Tenside 0,3 bis 0,6 Gew.-% beträgt. Anschließend wird ein saures Spülen mittels mindestens einer Behandlungslösung umfassend H₂SO₄ und/oder HNO₃ unter optionalem Zusatz von HF als Fluoride als Komplexbildner durchgeführt. Die Säurekonzentration beträgt hierbei von 2,5 bis 3,5 Gew.-% und die Fluoridkonzentration von 300 bis 600 mg/l. Nach der erfolgten Behandlung wird das Flachprodukt 6 auf einen zweiten Haspel 12 aufgewickelt.

Erfindungsgemäß ist nun eine Farbmesseinrichtung 14 vorgesehen, welche zur Farbmessung an der Oberfläche des Flachprodukts 6 zur Ermittlung mindestens eines Farbmesswerts eingerichtet ist. Die Farbmesseinrichtung 14 ist in Bandlaufrichtung nach den Mitteln 8 zum Beizen angeordnet, so dass eine Farbmessung nach dem Beizen des Flachprodukts 6 vorgenommen wird. Die Farbmessung wird inline mit dem Beizen des Flachprodukts 6 durchgeführt.

Eine Auswertungseinrichtung 10 ist vorgesehen, welche dafür eingerichtet ist, eine Ausgabeinformation anhand des mindestens einen Farbmesswerts zu erzeugen. Das Erzeugen der Ausgabeinformation umfasst hierbei einen Vergleich des mindestens einen Farbmesswerts mit mindestens einem Referenzwert. Beispielsweise wird die Farbmessung der Oberfläche im CIE L^{∗}a^{∗}b^{∗}-Farbraum durchgeführt und die Luminanz L^{∗} als Farbmesswert bestimmt.

Die Ausgabeinformation ist hierbei indikativ für die Einhaltung von mindestens einer Vorgabe für den Farbmesswert, wobei ein Referenzwert vorgegeben ist. Vorliegend wird geprüft, ob die Luminanz L^{∗} einen einzuhaltenden Mindestwert einhält, wobei der Mindestwert anhand der Aluminiumlegierung des Flachprodukts vorgegeben wird.

In einer optionalen Ausgestaltung wird eine vorhergehende Farbmessung an der Oberfläche des Flachprodukts 6 mittels der vorhergehenden Farbmesseinrichtung 18 durchgeführt. Das Erzeugen der Ausgabeinformation kann zusätzlich anhand des mindestens einen vorhergehenden Farbmesswerts vorgenommen werden, wobei eine Helligkeitsdifferenz zwischen der Luminanz L^{∗} vor und nach dem Behandeln gebildet wird. Eine zusätzliche Vorgabe kann dann beispielsweise sein, dass ebenfalls ein Mindestwert der Helligkeitsdifferenz einzuhalten ist.

Die Ausgabeinformation wird auf einer Anzeige 16 ausgegeben. Die Anzeige 16 ist beispielsweise als Ampel ausgestaltet und zeigt mit Grün das Einhalten der mindestens einen Vorgabe an. Ein gelbes Signal der Ampel weist zudem auf eine Abweichung von der mindestens einen Vorgabe hin. Zudem kann ein rotes Signal vorgesehen sein, welches eine kritische Abweichung signalisiert, wobei mit dem Auftreten einer kritischen Abweichung auch die Behandlung automatisch gestoppt wird. Anhand der Farbmessung an dem behandelten Flachprodukt 6 lässt sich hierbei mit hoher Zuverlässigkeit die Effektivität der Oberflächenbehandlung bestimmen.

Die Ausgabeinformation kann somit charakteristisch für eine Notwendigkeit einer Fehlersuche sein. Wird über die Ausgabeinformation angezeigt, dass eine Fehlersuche veranlasst ist, kann eine entsprechende Fehlersuche durchgeführt werden. Beispielsweise ist die Ausgabeinformation weiter charakteristisch dafür, dass Vorgabeparameter der mindestens einen Behandlungslösung für das Beizen wie etwa der pH-Wert und/oder die elektrische Leitfähigkeit eingehalten werden, so dass bei der Fehlersuche die Überprüfung der Vorrichtung im Hinblick auf mechanische Defekte priorisiert werden kann.

Mindestens ein Behandlungsparameter des Beizens kann zumindest teilweise anhand des mindestens einen Farbmesswerts manuell geregelt werden. Diese Regelung wird zumindest teilweise auf Grundlage der Ausgabeinformation durchgeführt.

Beispielsweise kann bei einer Abweichung von der mindestens einen Vorgabe in der laufenden Behandlung eingegriffen werden, indem einzelne Behandlungsparameter der mindestens einen Behandlungslösung manuell angepasst werden. Hierfür kann beispielsweise ein gelbes Signal verwendet werden. Bei einer kritischen Abweichung kann beispielsweise die Vorrichtung zur Behandlung weiter überprüft werden und nach einer Fehlersuche und Fehlerbehebung die Behandlung fortgesetzt werden. Hierfür kann beispielsweise ein rotes Signal verwendet werden.

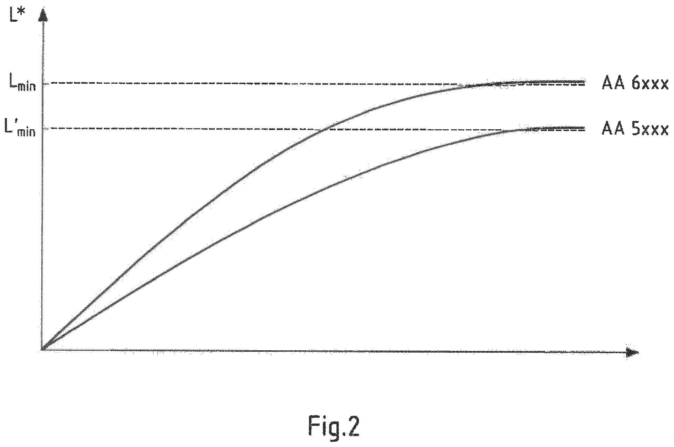

Zur weiteren Erläuterung ist in Fig. 2 ein schematisches Diagramm über die Abhängigkeit der erzielten Luminanz, die als Ordinate aufgetragen ist, von Aluminiumlegierungen des Typs AA 5xxx und AA 6xxx in Abhängigkeit eines Behandlungsparameters, der als Abszisse aufgetragen ist, gezeigt. Mit einem höheren Behandlungsparameter ergibt sich hierbei tendenziell eine höhere Luminanz L^{∗}, welche aus einem vollständigeren Beizen mit einer weitergehenden Entfernung der Oxidschicht, intermetallischer Phasen, eingewalzten Partikeln und oberflächennahen Anreicherungen resultiert. Problematisch bei Verfahren aus dem Stand der Technik ist hierbei, dass die Kinetik der Beizreaktion von einer Vielzahl von Parametern abhängen kann, da mit der Behandlung auch selbstinhibierende Prozesse auftreten, beispielsweise durch die Anreicherung von reaktionshemmenden Begleitstoffen.

Mit der Farbmessung an der Oberfläche des behandelten Flachprodukts lassen sich hierbei optimale Behandlungsparameter einstellen, wobei die Regelung auch für eine Vielzahl von verschiedenen Flachprodukten verwendet werden kann. Die verschiedenen Flachprodukte können beispielsweise verschiedene Legierungen, Herstellungsverfahren und Geometrien aufweisen.

Beispielsweise wird ein Vergleich des mindestens einen Farbmesswerts mit mindestens einem Referenzwert vorgenommen. Der mindestens eine Referenzwert wird in Abhängigkeit der Aluminiumlegierung des Flachprodukts 6 bestimmt, wobei für Legierungen der Typen AA 6xxx ein Wert Lₘᵢₙ und für Legierungen der Typen AA 5xxx ein Wert L'ₘᵢₙ vorgegeben wird. Der Wert L'ₘᵢₙ für die Legierungen der Typen AA 5xxx ist in diesem Beispiel niedrigerer als der Wert L'ₘᵢₙ für die Legierungen der Typen AA 6xxx. Beispielsweise kann eine Konzentration wie eine Laugenkonzentration oder Säurekonzentration in der mindestens einen Behandlungslösung nicht nur anhand eines Absolutwerts eingestellt werden, sondern wird so gewählt, dass die Minimalwerte der Luminanz Lₘᵢₙ bzw. L'ₘᵢₙ bei gleichzeitig möglichst geringer Konzentration erreicht werden.

Zudem wurden an Flachprodukten aus verschiedenen Aluminiumlegierungen unter verschiedenen Behandlungsparametern Messungen der Luminanz L^{∗} durchgeführt. Die Farbmessung der Oberfläche erfolgte im CIE L^{∗}a^{∗}b^{∗}-Farbraum unter Ausschluss der direkten Reflektion in 45°/0°-Geometrie bei Verwendung einer Normlichtart D65 und einem Beobachtungswinkel von 10°.

In Tabelle 1 sind Ergebnisse für die Luminanz L^{∗} für Flachprodukte aus der Legierung AA 5182 zusammengefasst.

**Tabelle 1**

| AA 5182 | | alkalische Entfettung/Beizen | | saure Spülung/Dekapierung | | |
|---|---|---|---|---|---|---|
| Beispiel | L^{∗} | NaOH [Gew%] | Tensid [Gew%] | Dekapiersäure [Gew%] | Fluorid-Konzentration [mg/l] | Ergebnis |
| 1 | 60 | 0,8 | 0,5 | 3,2 | 329 | + |
| 2 | 60 | 0,8 | 0,5 | 3,2 | 329 | + |
| 3 | 60 | 0,8 | 0,5 | 3,2 | 329 | + |
| 4 | 60 | 0,8 | 0,5 | 3,2 | 329 | + |
| 5 | 59 | 0,8 | 0,5 | 3,2 | 329 | + |
| 6 | 60 | 0,7 | 0,7 | 3,0 | 344 | + |
| 7 | 60 | 0,7 | 0,7 | 3,0 | 344 | + |
| 8 | 58 | 0,7 | 0,7 | 3,0 | 344 | + |
| 9 | 56 | 0,8 | 0,3 | 2,9 | 359 | - |
| 10 | 54 | 0,7 | 0,3 | 2,9 | 212 | - |
| 11 | 55 | 0,7 | 0,3 | 2,9 | 212 | - |

Die Oberflächen der Beispiele 1 - 8, welche eine zufriedenstellende Behandlung und damit eine vollständige Entfernung der Walzrückstände, der Oxidschicht sowie Partikel und Anreicherungen aufweisen, sind hierbei mit einem Ergebnis "+" gekennzeichnet. Die Beispiele 9 - 11 hingegeben zeigen eine unzureichende Behandlung der Oberfläche mit einem Ergebnis "-", was insbesondere auf eine zu geringe Tensidkonzentration in der alkalischen Behandlungszone und einer etwas niedrigeren Säurekonzentration beim Spülen bzw. Dekapieren zurückzuführen sein kann.

Anhand der Werte für die Luminanz L^{∗} lässt sich jedoch die Qualität der behandelten Oberfläche ermitteln, wobei die positiven Ergebnisse der Behandlung für die Legierung des Typs AA 5182 Werte für die Luminanz von 58 und insbesondere 60 erreichen. Beispielsweise kann mit dem vorliegenden Verfahren eine entsprechende Abweichung kenntlich gemacht werden. Beispielsweise kann die Säurekonzentration beim Dekapieren anhand der gemessenen Luminanz L^{∗} manuell oder teilweise automatisiert geregelt werden, so dass die genannten Werte der Luminanz erreicht werden.

In Tabelle 2 sind weitere Ergebnisse für die Luminanz L^{∗} für Flachprodukte aus der Legierung AA 6016 zusammengefasst.

**Tabelle 2**

| AA 6016 | | alkalische Entfettung/Beizen | | saure Spülung/Dekapierung | | |
|---|---|---|---|---|---|---|
| Beispiel | L^{∗} | NaOH [m/m%] | Tensid [m/m%] | Dekapiersäure [m/m%] | Fluorid-Konzentration [mg/l] | Ergebnis |
| 12 | 64 | 0,8 | 0,3 | 2,9 | 378 | + |
| 13 | 62 | 0,7 | 0,4 | 3,1 | 300 | + |
| 14 | 62 | 0,7 | 0,7 | 3,0 | 344 | + |
| 15 | 63 | 0,7 | 0,7 | 3,0 | 344 | + |
| 16 | 62 | 0,7 | 0,7 | 3,0 | 344 | + |
| 17 | 62 | 0,7 | 0,7 | 3,0 | 344 | + |
| 18 | 62 | 0,6 | 0,3 | 3,5 | 284 | + |
| 19 | 62 | 0,6 | 0,3 | 3,5 | 284 | + |
| 20 | 57 | 0,8 | 0,7 | 2,7 | 277 | - |
| 21 | 59 | 0,8 | 0,2 | 3,3 | 495 | - |
| 22 | 60 | 0,7 | 0,4 | 2,8 | 358 | - |

Hier zeigt sich für die Beispiele 12 - 19 ein positives Behandlungsergebnis, während die Behandlung für die Beispiele 20 - 22 nur unzureichend ist. Für die Beispiele 20 und 22 kann davon ausgegangen werden, dass das negative Ergebnis mit einer zu niedrigen Säurekonzentration beim Dekapieren zusammenhängt. Beispiel 20 wurde zudem mit einer niedrigen Fluoridkonzentration dekapiert. Beispiel 21 ist dagegen mit vergleichsweise hohen Konzentrationen beim Dekapieren behandelt, wobei jedoch eine niedrige Tensidkonzentration beim Beizen/Entfetten vorliegt.

Auch hier lässt sich anhand der Luminanz L^{∗} ein Rückschluss auf das Ergebnis der Behandlung ziehen, wobei die Werte für die Luminanz L^{∗} der Positivbeispiele 12 - 19 bei mindestens 62 und insbesondere mindestens 64 liegen.

Das Verfahren ermöglicht somit die Behandlung von einer Vielzahl von Flachprodukten aus verschiedenen Aluminiumlegierungen, wobei beispielsweise Referenzwerte wie eine minimale, zu erreichende Luminanz L^{∗} anhand der Eigenschaften der Flachprodukte bestimmt werden.

Tabelle 3 zeigt zu der möglichen Variation der Werte für die Luminanz L^{∗} noch Farbmessungen an Legierungen der Typen AA 5754 und AA 6451. An Legierungen der Typen AA 5754 werden mit einem positiven Behandlungsergebnis vergleichsweise hohe Werte für die Luminanz L^{∗} von mindestens 68 erreicht. An Legierungen der Typen AA 6451 werden mit einem positiven Behandlungsergebnis vergleichsweise geringe Minimalwerte für die Luminanz L^{∗} von mindestens 55 erreicht. Die Luminanzwerte für Legierungen der Typen AA 6451 sind hierbei auch niedriger als Luminanzwerte, welche üblicherweise für sonstige Legierungen des Typs AA 6xxx erhalten werden.

**Tabelle 3**

| | | alkalische Entfettung/Beizen | | saure Dekapierung | | |
|---|---|---|---|---|---|---|
| Legierung | L^{∗} | NaOH [m/m%] | Tensid [m/m%] | Dekapiersäure [m/m%] | Fluorid-Konzentration [mg/l] | Ergebnis |
| AA 5754 | 74 | 0,8 | 0,3 | 2,9 | 378 | + |
| AA 5754 | 71 | 0,8 | 0,3 | 2,9 | 378 | + |
| AA 5754 | 68 | 0,8 | 0,3 | 2,9 | 359 | + |
| AA 5754 | 68 | 0,8 | 0,3 | 2,9 | 359 | + |
| AA 6451 | 57 | 0,8 | 0,3 | 2,9 | 378 | + |
| AA 6451 | 56 | 0,8 | 0,3 | 2,9 | 378 | + |
| AA 6451 | 56 | 0,8 | 0,4 | 3,6 | 326 | + |
| AA 6451 | 55 | 0,8 | 0,4 | 3,6 | 326 | + |

Neben der Luminanz L^{∗} können auch andere Farbmesswerte für die Beurteilung der Wirkung der Behandlung herangezogen werden. Tabelle 4 zeigt hierzu eine Übersicht von Farbmesswerten gemeinsam mit einer Beurteilung des Behandlungsergebnisses. Die Farbmessung wurde hierbei nach der Behandlung durchgeführt. Die Flachprodukte bestehen aus einer Legierung des Typs AA6016.

Beispielsweise kann hierbei auch b^{∗} als Farbmesswert herangezogen werden, um eine Ausgabeinformation indikativ für die Einhaltung von mindestens einer Vorgabe zu erhalten. In der Messreihe aus Tabelle 4 sind beispielsweise niedrigere Werte für b^{∗} und insbesondere Werte von b^{∗} unterhalb von 10,0 oder 8,0 indikativ für ein gutes Behandlungsergebnis.

Ebenso kann alternativ oder kumulativ ΔE^{∗} für die Beurteilung herangezogen werden, wobei hier ein Höchstabstand zu einem Referenzmuster und/oder ein Mindestabstand zu einer Farbmessung vor der Oberflächenbehandlung ein gutes Behandlungsergebnis anzeigen. Der Höchstabstand zu einem Referenzmuster ist ein niedrigerer Wert von ΔE^{∗}. Der Mindestabstand zu einer Farbmessung vor der Oberflächenbehandlung entspricht höheren Werten von ΔE^{∗}.

In Tabelle 5a ist weiter ein Beispiel für eine Behandlung umfassend das Beizen eines Flachprodukts aus einer Legierung des Typs AA5182 gezeigt, welche unter einer chemischen Reaktion erfolgt, wobei in der chemischen Reaktion ein selbstinhibierender Prozess auftritt. Hierbei wurden bei den Behandlungen die online erfassbaren Behandlungsparameter automatisch geregelt und in einem vorgegebenen Intervall gehalten. Die online erfassbaren Behandlungsparameter sind beispielsweise die Leitfähigkeit der mindestens einen alkalischen Behandlungslösung zur Entfettung/zum Beizen und die Leitfähigkeit der mindestens einen sauren Behandlungslösung zur Spülung. Die online erfassbaren Behandlungsparameter sind für verschiedene Uhrzeiten am gleichen Tag in Tabelle 5a festgehalten.

Weiter wurden Behandlungsparameter diskontinuierlich in einer offline-Messung erhoben, welche in Tabelle 5b wiedergegeben sind. Die hierbei gemessenen Konzentrationen lagen ebenfalls in den jeweils vorgegebenen Intervallen.

Durch das Auftreten von selbstinhibierenden Prozessen kann der Beizangriff der mindestens einen Behandlungslösungen vermindert bzw. verlangsamt werden, was zu einem unzureichenden Behandlungsergebnis führen kann. Die selbstinhibierenden Prozesse können zu einem latenten Effekt wie beispielsweise einem "Einschlafen" der mindestens einen Behandlungslösung führen. Die Auswirkung der selbstinhibierenden Prozesse kann hierbei eine gesicherte Aussage über das Beizergebnis anhand von online erfassbaren, globalen Parametern wie der elektrischen Leitfähigkeit und dem pH-Wert, sowie nicht kontinuierlich bestimmbarer Behandlungsparameter wie der Al-Konzentration oder der Konzentration der einzelnen Komponenten der mindestens einen Behandlungslösung verhindern. Aus Tabelle 5a lässt sich erkennen, dass trotz der im Wesentlichen konstanten Behandlungsparameter für die mindestens eine Behandlungslösung der Beizangriff auf das Flachprodukt variierte und innerhalb weniger Stunden deutlich abnahm.

Für die Helligkeit L^{∗} bestand jedoch eine gute Korrelation zum Behandlungsergebnis, so dass basierend auf den Farbmesswerten eine Ausgabeinformation zur Verfügung gestellt werden kann, welche charakteristisch für die Notwendigkeit einer Fehlersuche ist. Die Ausgabeinformation kann weiter charakteristisch dafür sein, dass die Vorgabeparameter der mindestens einen Behandlungslösung für die Behandlung des Flachprodukts wie im Beispiel aus Tab. 5a und 5b eingehalten werden.

In Tabelle 6a ist ein weiteres Beispiel für eine Behandlung umfassend das Beizen von Flachprodukten aus Legierungen des Typs AA5754 und des Typs AA5182 gezeigt. Die in Tab. 6a vermerkten Uhrzeiten beziehen sich auf einen anderen Tag als die in Tab. 5a gezeigten Messungen. Die diskontinuierlich und offline erfassbaren Behandlungsparameter sind in Tabelle 6b wiedergegeben.

Der Unterschied in den Helligkeitswerten L^{∗} zwischen 19:42 und 20:33 ist zumindest teilweise durch den Wechsel der Legierungen bedingt, wobei beide Helligkeitswerte noch auf ein gutes Behandlungsergebnis hinweisen. Der Helligkeitswert L^{∗} der dritten Messung um 21:03 genügt jedoch - sowohl im Vergleich zu der vorher gefertigten Legierung des gleichen Typs, als auch im Vergleich zu einem Referenzwert für L^{∗} von mindestens 58, insbesondere mindestens 60 - nicht einer Vorgabe für den Helligkeitswert.

Somit lässt die Helligkeitsmessung L^{∗} darauf schließen, dass im Zeitraum zwischen 20:33 und 21:03 ein Problem aufgetreten sein muss, da die geringere Helligkeit indikativ für einen zu geringen Beizangriff ist. Entsprechend konnte eine Ausgabeinformation erzeugt werden, welche charakteristisch dafür ist, dass eine Fehlersuche notwendig ist. Die Ausgabeinformation konnte ebenso charakteristisch dafür sein, dass die gemessenen Behandlungsparameter der mindestens einen Behandlungslösungen die Vorgabeparameter einhielten.

In einer daraufhin ausgelösten Fehlersuche konnte ein defekter Sprühkranz identifiziert werden, dessen Versagen bei alleinigem Verlass auf die chemischen Analysen der Bäder nicht ohne weiteres bemerkt worden wäre.

**Tabelle 4**

| Legierung | Farbmesswerte | | | | alkalische Entfettung/Beizen | | | saure Dekapierung | | | |
|---|---|---|---|---|---|---|---|---|---|---|---|
| | L^{∗} | a^{∗} | b^{∗} | ΔE^{∗} | NaOH [m/m%] | Tensid [m/m%] | Al-Konzentration [g/l] | Dekapiersäure [m/m%] | Fluorid-Konzentration [mg/l] | Al-Konzentration [g/l] | Ergebnis |
| AA6016 | 64 | -9,3 | 7,8 | 32 | 0,6 | 0,5 | 1,4 | 3,3 | 378 | 1,8 | + |
| AA6016 | 64 | -9,2 | 8,0 | 32 | 0,6 | 0,3 | 1,2 | 3,0 | 460 | 1,0 | + |
| AA6016 | 57 | -20,8 | 16,0 | 43 | 0,5 | 0,4 | 0,2 | 2,8 | 326 | 0,9 | - |

**Tabelle 5a**

| Uhrzeit | Legierung | L^{∗} | Leitfähigkeit (alkalisch) [mS/cm] | Leifähigkeit (sauer) [mS/cm] |
|---|---|---|---|---|
| 18:48 | AA5182 | 56 | 34,2 | 104,6 |
| 19:29 | AA5182 | 54 | 34,6 | 103,7 |
| 20:57 | AA5182 | 50 | 34,5 | 103,6 |

**Tabelle 5b**

| Al-Konzentration (alkalisch) [g/l] | Laugenkonzentration [m/m%] | Tensidkonzentration [m/m%] | Al-Konzentration (sauer) [g/l] | Fluorid-Konzentration [mg/l] | Säurenkonzentration [m/m%] |
|---|---|---|---|---|---|
| 1,4 | 0,8 | 0,6 | 0,6 | 512 | 3,1 |

**Tabelle 6a**

| Uhrzeit | Legierung | L^{∗} | Leitfähigkeit (alkalisch) [mS/cm] | Leifähigkeit (sauer) [mS/cm] | Ergebnis |
|---|---|---|---|---|---|
| 19:42 | AA5754 | 68 | 33,1 | 97,8 | + |
| 20:33 | AA5182 | 63 | 33,8 | 98,5 | + |
| 21:03 | AA5182 | 56 | 34,6 | 97,9 | - |

**Tabelle 6b**

| Al-Konzentration (alkalisch) [g/l] | Laugenkonzentration [m/m%] | Tensidkonzentration [m/m%] | Al-Konzentration (sauer) [g/l] | Fluorid-Konzentration [mg/l] | Säurenkonzentration [m/m%] |
|---|---|---|---|---|---|
| 1,8 | 0,8 | 0,3 | 0,4 | 367 | 2,9 |

## Patentansprüche

1. Verfahren zur Oberflächenbehandlung von Flachprodukten aus Aluminiumlegierungen, das Verfahren umfassend:
- Beizen des Flachprodukts (6);
- Durchführen einer Farbmessung an der Oberfläche des Flachprodukts (6) zur Ermittlung mindestens eines Farbmesswerts nach dem Beizen des Flachprodukts (6);
- Erzeugen einer Ausgabeinformation anhand des mindestens einen Farbmesswerts, wobei die Ausgabeinformation indikativ für die Einhaltung von mindestens einer Vorgabe für den Farbmesswert ist;
- Ausgabe oder Auslösen der Ausgabe der Ausgabeinformation,
wobei die Ausgabeinformation charakteristisch für eine Notwendigkeit einer Fehlersuche und Durchführen der Fehlersuche ist; und
- wobei die Ausgabeinformation einen Hinweis darauf geben kann, dass ein Fehler in der Prozessführung vorliegt, welcher nicht direkt auf die Zusammensetzung mindestens einer Behandlungslösung für das Beizen zurückgeht.

2. Verfahren nach Anspruch 1,
**dadurch gekennzeichnet, dass**
die Ausgabeinformation weiter charakteristisch dafür ist, ob mindestens ein Vorgabeparameter der mindestens einen Behandlungslösung für das Beizen des Flachprodukts (6) eingehalten wird.

3. Verfahren nach einem der Ansprüche 1 oder 2,
**dadurch gekennzeichnet, dass**
die Ausgabeinformation indikativ für den Grad eines selbstinhibierenden Prozesses ist.

4. Verfahren nach einem der voranstehenden Ansprüche
**dadurch gekennzeichnet, dass**
mindestens eine Konzentration einer Komponente der mindestens einen Behandlungslösung überwacht wird und bei Abweichungen der Ausgabeinformation von der mindestens einen Vorgabe auf den Grad des selbstinhibierenden Prozesses geschlossen werden kann.

5. Verfahren nach einem der voranstehenden Ansprüche,
**dadurch gekennzeichnet, dass**
das Durchführen der Farbmessung inline und/oder at-line mit dem Beizen des Flachprodukts (6) vorgenommen wird.

6. Verfahren nach einem der voranstehenden Ansprüche,
**dadurch gekennzeichnet, dass**
eine visuelle Ausgabe der Ausgabeinformation bewirkt oder ausgelöst wird.

7. Verfahren nach einem der voranstehenden Ansprüche,
**dadurch gekennzeichnet, dass**
über die Ausgabeinformation eine Interaktion mit dem Behandlungsverfahren zur Vermeidung technischer Störungen erfolgt.

8. Verfahren nach einem der voranstehenden Ansprüche,
**dadurch gekennzeichnet, dass**
das Beizen des Flachprodukts (6) mit mindestens einer Behandlungslösung durchgeführt wird und die mindestens eine Behandlungslösung mindestens zwei Säuren oder mindestens zwei Basen enthält.

9. Verfahren nach einem der voranstehenden Ansprüche,
**dadurch gekennzeichnet, dass**
das Erzeugen der Ausgabeinformation einen Vergleich des mindestens einen Farbmesswerts mit mindestens einem Referenzwert umfasst.

10. Verfahren nach Anspruch 9,
**dadurch gekennzeichnet, dass**
der mindestens eine Referenzwert zumindest teilweise in Abhängigkeit der Aluminiumlegierung des Flachprodukts (6), der Abmessung des Flachprodukts (6), der Oberflächenstruktur des Flachprodukts (6) und/oder der Herstellung des Flachprodukts (6) vorgegeben wird.

11. Verfahren nach Anspruch 9 oder 10,
**dadurch gekennzeichnet, dass**
der Vergleich des mindestens einen Farbmesswerts mit dem mindestens einen Referenzwert die Bestimmung einer Helligkeitsdifferenz und/oder die Bestimmung eines Farbabstands umfasst.

12. Verfahren nach einem der voranstehenden Ansprüche, weiter umfassend:
- Durchführen einer vorhergehenden Farbmessung an der Oberfläche des Flachprodukts (6) vor dem Beizen und/oder zwischen Beizschritten zur Ermittlung mindestens eines vorhergehenden Farbmesswerts,
- wobei das Erzeugen der Ausgabeinformation weiter anhand des mindestens einen vorhergehenden Farbmesswerts vorgenommen wird.

13. Verfahren nach einem der voranstehenden Ansprüche,
**dadurch gekennzeichnet, dass**
- ein Flachprodukt (6) aus einer Aluminiumlegierung des Typs AA 5xxx, insbesondere AA 5182 behandelt wird und
- wobei eine Luminanz L^{∗} von mindestens 58, insbesondere mindestens 60 eingestellt wird.

14. Verfahren nach einem der voranstehenden Ansprüche,
**dadurch gekennzeichnet, dass**
- ein Flachprodukt (6) aus einer Aluminiumlegierung des Typs AA 6xxx, insbesondere AA 6016 behandelt wird und
- wobei eine Luminanz L^{∗} von mindestens 62, insbesondere mindestens 64 eingestellt wird.

## Claims

1. Method for the surface treatment of flat products made of aluminium alloys, the method comprising:
- pickling of the flat product (6);
- carrying out a colour measurement on the surface of the flat product (6) to determine at least one measured colour value after pickling the flat product (6);
- generating output information on the basis of the at least one measured colour value, the output information being indicative of compliance with at least one default for the measured colour value;
- outputting or triggering the output of the output information, the output information being characteristic of a need for error search and carrying out the error search; and
- wherein the output information can provide an indication that there is an error in the process flow which is not directly attributed to the composition of at least one treatment solution for the pickling.

2. Method according to claim 1,
**characterized in that**
the output information is further characteristic of whether there is compliance with at least one default parameter of the at least one treatment solution for the pickling of the flat product (6).

3. Method according to one of claims 1 or 2,
**characterized in that**
the output information is indicative of the degree of a self-inhibiting process.

4. Method according to one of the preceding claims,
**characterized in that**
at least one concentration of a component of the at least one treatment solution is monitored and, in the event of deviations of the output information from the at least one default, a conclusion can be drawn about the degree of the self-inhibiting process.

5. Method according to one of the preceding claims,
**characterised in that**
the colour measurement is carried out in-line and/or at-line with the pickling of the flat product (6).

6. Method according to one of the preceding claims,
**characterised in that**
a visual output of the output information is caused or triggered.

7. Method according to one of the preceding claims,
**characterised in that**
an interaction with the treatment method takes place via the output information in order to avoid technical faults.

8. Method according to one of the preceding claims,
**characterised in that**
the pickling of the flat product (6) is carried out with at least one treatment solution and the at least one treatment solution contains at least two acids or at least two bases.

9. Method according to one of the preceding claims,
**characterised in that**
the generation of the output information comprises a comparison of the at least one measured colour value with at least one reference value.

10. Method according to claim 9,
**characterised in that**
the at least one reference value is predefined at least partially as a function of the aluminium alloy of the flat product (6), of the dimension of the flat product (6), of the surface structure of the flat product (6) and/or of the manufacture of the flat product (6).

11. Method according to claim 9 or 10,
**characterised in that**
the comparison of the at least one measured colour value with the at least one reference value comprises the determination of a brightness difference and/or the determination of a colour distance.

12. Method according to one of the preceding claims, further comprising:
- carrying out a previous colour measurement on the surface of the flat product (6) before the pickling and/or between pickling steps to determine at least one previous measured colour value,
- wherein the generation of the output information is further performed on the basis of the at least one previous measured colour value.

13. Method according to one of the preceding claims,
**characterised in that**
- a flat product (6) made of an aluminium alloy of the type AA 5xxx, in particular AA 5182 is treated and
- wherein a luminance L^{∗} of at least 58, in particular at least 60, is adjusted.

14. Method according to one of the preceding claims,
**characterised in that**
- a flat product (6) made of an aluminium alloy of the type AA 6xxx, in particular AA 6016 is treated and
- wherein a luminance L^{∗} of at least 62, in particular at least 64, is adjusted.

## Revendications

1. Un procédé pour le traitement de la surface de produits plats en alliage d'aluminium, le procédé comprenant :
- le décapage du produit plat (6) ;
- l'effectuation d'une mesure de couleur à la surface du produit plat (6) pour la détermination d'au moins une valeur de mesure de couleur après le décapage du produit plat (6) ;
- la génération d'une information de sortie sur la base de l'au moins une valeur de mesure de couleur, l'information de sortie étant indicative du respect d'au moins une consigne pour la valeur de mesure de couleur;
- la sortie ou le déclenchement de la sortie de l'information de sortie, l'information de sortie étant caractéristique d'un besoin d'un recherche d'erreurs et l'effectuation de la recherche d'erreurs; et
- dans lequel l'information de sortie peut fournir une indication qu'il existe une erreur dans la conduite de processus qui n'est pas directement imputable à la composition d'au moins une solution de traitement pour le décapage.

2. Le procédé selon la revendication 1,
**caractérisé en ce que**
l'information de sortie est en outre caractéristique du fait qu'au moins un paramètre de consigne de l'au moins une solution de traitement pour le décapage du produit plat (6) est respecté.

3. Le procédé selon l'une des revendications 1 ou 2,
**caractérisé en ce que**
l'information de sortie est indicative du degré d'un processus auto-inhibiteur.

4. Le procédé selon l'une des revendications précédentes,
**caractérisé en ce qu'**
au moins une concentration d'un composant de l'au moins une solution de traitement est surveillée et, en cas d'écarts de l'information de sortie par rapport à l'au moins une consigne, une conclusion sur le degré du processus auto-inhibiteur peut être tirée.

5. Le procédé selon l'une des revendications précédentes,
**caractérisé en ce que**
l'effectuation de la mesure de couleur est réalisée in-line et/ou at-line avec le décapage du produit plat (6).

6. Le procédé selon l'une des revendications précédentes,
**caractérisé en ce qu'**
une sortie visuelle de l'information de sortie est provoquée ou déclenchée.

7. Le procédé selon l'une des revendications précédentes,
**caractérisé en ce qu'**
une interaction avec le processus de traitement est effectuée via l'information de sortie afin d'éviter des défauts techniques.

8. Le procédé selon l'une des revendications précédentes,
**caractérisé en ce que**
le décapage du produit plat (6) est effectué avec au moins une solution de traitement et l'au moins une solution de traitement contient au moins deux acides ou au moins deux bases.

9. Le procédé selon l'une des revendications précédentes,
**caractérisé en ce que**
la génération de l'information de sortie comprend une comparaison de l'au moins une valeur de mesure de couleur avec au moins une valeur de référence.

10. Le procédé selon la revendication 9,
**caractérisé en ce que**
l'au moins une valeur de référence est prédéfinie au moins partiellement en fonction de l'alliage d'aluminium du produit plat (6), de la dimension du produit plat (6), de la structure de surface du produit plat (6) et/ou de la fabrication du produit plat (6).

11. Le procédé selon la revendication 9 ou 10,
**caractérisé en ce que**
la comparaison de l'au moins une valeur de mesure de couleur avec l'au moins une valeur de référence comprend la détermination d'une différence de luminosité et/ou la détermination d'une distance de couleur.

12. Le procédé selon l'une des revendications précédentes, comprenant en outre :
- l'effectuation d'une mesure de couleur précédente à la surface du produit plat (6) avant le décapage et/ou entre des étapes de décapage pour la détermination d'au moins une valeur de mesure de couleur précédente,
- dans lequel la génération de l'information de sortie est en outre réalisée sur la base de l'au moins une valeur de mesure de couleur précédente.

13. Le procédé selon l'une des revendications précédentes,
**caractérisé en ce qu'**
- un produit plat (6) en alliage d'aluminium du type AA 5xxx, en particulier AA 5182, est traité et
- dans lequel une luminance L^{∗} d'au moins 58, en particulier d'au moins 60, est réglée.

14. Le procédé selon l'une des revendications précédentes,
**caractérisé en ce qu'**
- un produit plat (6) en alliage d'aluminium du type AA 6xxx, en particulier AA 6016, est traité et
- dans lequel une luminance L^{∗} d'au moins 62, en particulier d'au moins 64, est réglée.
